# EUROPEAN PATENT APPLICATION

(11) **EP 1 806 609 A1**
(43) Date of publication of application: **11.07.2007**
(21) Application number: 06250052.5
(22) Date of filing: 06.01.2006
(51) Int. Cl.: G02B 6/44

(54) **Optical fibre installation apparatus and method**

(71) Applicant: BRITISH TELECOMMUNICATIONS public limited company, London EC1A 7AJ (GB)
(72) Inventor: The designation of the inventor has not yet been filed
(74) Representative: Lofting, Coreena Fiona Anne

(57) **Abstract**

A shielding device to reduce fluid leakage, suitable for use with apparatus to install a fibre unit into a fibre tube using pressurised fluid, the apparatus comprising a plurality of sections which can be configured to form a bore, the bore having a first bore end and a second bore end, wherein during installation of the fibre unit, the pressurised fluid is fed via the bore into the fibre tube connected to the first bore end, and wherein the apparatus, when assembled, includes a seam where the plurality of sections join through which the pressurised fluid can escape from the bore, the shielding device comprising shielding means non-integral with the apparatus, for reducing the fluid leakage from the bore through the seam when in use.

## Description

This invention relates to methods and apparatus for the installation of telecommunications cables, in particular optical fibre installed into pre-installed optical fibre tubes by "blowing" techniques.

The method and apparatus used to install optical fibre transmission lines by "blowing" them into optical fibre tubes or ducts using the viscous drag provided a high-speed flow of a fluid medium, often air, is known from EP108590 and subsequent publications. A "blowing head" is used for the installation of the optical fibre unit into the optical fibre tubes or ducts. (In this description, references to "fibre" and "fibre units" shall be deemed to include individual fibre members, fibre units comprising a number or fibre members, fibre bundles, or the like, as the context permits.)

The blowing head comprises a chamber, into which pressurised air is pumped: this is the "air chamber" which shall be further described below. The air is directed to flow into the mouth of a fibre tube connected to the blowing head, and then through the tube. In the initial stages of the installation process, the fibre unit is mechanically pushed into the fibre tube, usually in the form of drive wheels. When a sufficient length of fibre unit has been driven into the tube so that there is a sufficient amount of fibre surface within the tube, the effects of viscous drag of the air flowing through the tube, take over at least part of the task of advancing the fibre along the tube.

The blowing heads of the prior art are used for two main types of installation. The first is a unidirectional installation wherein the optical fibre is driven into one end of a length of fibre tube. When the fibre unit emerges at the other end, the tube is populated by the fibre unit and the installation is complete.

A second, "bi-directional" type of installation session starts from an intermediate point in the intended path of the fibre when installed: Such an installation method can be used to populate longer tubes, where the total distance to be covered exceeds that possible in a single blowing session. Briefly, one end of the fibre unit is fed into a first tube and blown in one direction until the end emerges from the far end of the first length of tube; the process is repeated taking the other end of the fibre unit and blowing it in the opposite direction down the second tube.

To allow the change of blowing direction in bi-directional installations, a blowing head designed for this purpose can opened along the line of the fibre unit travel, so that the fibre unit captured in the blowing head can be released to enable the head to be turned around. An example of such a blowing head is described in EP1015928 and illustrated in Figure 10 therein. This is a complication on a blowing head used only for unidirectional installations, where the air chamber can have a "unitary" design, i.e. one which cannot be "split" open. However, blowing heads with unitary air chambers are necessarily less flexible as they cannot perform bi-directional installation.

"Split" air chambers in blowing heads of the prior art comprise a number of sections, to be sealed shut (e.g. by clamping) during an installation session, to ensure that the fibre unit moves only along its path, and to guard against the escape of air from the blowing head.

It has been found that in use, the blowing heads using non-unitary air chambers of the prior art suffer from substantial air leakage. Air is fed into the chamber of the blowing head under considerable pressure, typically from 5 to 15 bars. This high pressure is required because a fibre tube has a very small internal diameter (typically not exceeding 3.5 mm), but may be of very great length: fibre tubes populated by the blowing technique which exceed 1,000 metres are currently not uncommon. The bore of the air chamber along which the fibre travels is typically about 1.1 to 1.2 mm in diameter. The highly pressurised air fed into the chamber will seek escape at high pressure from every point of weakness in the air chamber.

Deformable seals are used in the blowing heads of the prior art to defend against air leakage, but these require care and accuracy in placement. Thick, relatively spongy deformable seals made of rubbery materials have superior sealing ability. However, British Telecommunications plc has within the UK adopted the use of enhanced performance fibre units (EPFU) (described in e.g. EP186753). These are optical fibres coated with tiny glass bead or microspheres which respond better to viscous drag than an uncoated, smooth surface. Deformable, rubbery seals are more prone to damage by abrasion by the glass microspheres than hard, less-easily deformable - and thus less effective - seals. The applicants have found that the deformable seals of the prior art blowing head required frequent and costly replacement.

A solution is to form the sections exposed to the optical fibres out of a durable material such as stainless steel. However if these sections are also to have some air-resistant properties, the will have to be shaped with that purpose in mind. This greatly increases the cost of manufacture - the material itself is expensive; also the skill and care required to tool an air seal from e.g. anodised aluminium would add to the overall cost of manufacturing and operating the blowing head. Furthermore, the use of such materials in the air chamber would increase the weight of the blowing head.

As a result of air leakage from the blowing head, the air available to generate the required viscous drag within the fibre tube decreases. It is thus necessary to employ expensive high-volume air compressors to compensate for the loss of air. In addition to the expense operating such compressors to compensate for the wastage, the weight and bulk of the machinery has necessitated the employment of more than one installation operative in the field, with associated cost implications.

A further problem with blowing heads of the prior art arises from differing sizes of fibre bundles (comprising a number of fibre units or members) and the sizes of fibre tubes. British Telecommunications plc deploys, or has deployed in the past 18 years, bundles ranging from 2 to 12 fibre members. Tube sizes to receive the fibre units or bundles, vary accordingly. It is unknown what other sizes may be adopted in the future. While the blowing heads of the prior art attempt to build in a measure of flexibility in the range of fibre bundles and tubes they can handle, a single blowing head capable of handling the entire range of sizes available now and in the future, would be cost-efficient and greatly advantageous.

With the advent of fibre to the home (FTTH), it is anticipated that the next generation of blowing heads will be deployed to bring optical fibre to very price-sensitive residential customers. This means that not only should the blowing heads themselves be made from cost-efficient materials, but further that they should be cheap to operate to ensure a low-cost installation, involving as few personnel as possible. A heavy, expensive, inflexible blowing head requiring a large compressor manned by a number of operatives is a disadvantage in the vision for ubiquitous FTTH.

According to a first aspect of the invention, there is provided a shielding device to reduce fluid leakage, suitable for use with apparatus to install a fibre unit into a fibre tube using pressurised fluid, the apparatus comprising a plurality of sections which can be configured to form a bore, the bore having a first bore end and a second bore end, wherein during installation of the fibre unit, the pressurised fluid is fed via the bore into the fibre tube connected to the first bore end, and wherein the apparatus, when assembled, includes a seam where the plurality of sections join through which the pressurised fluid can escape from the bore, the shielding device comprising shielding means non-integral with the apparatus, for reducing the fluid leakage from the bore through the seam when in use.

According to a second aspect of the invention, there is provided apparatus to install a fibre unit into a fibre tube using pressurised fluid, comprising a plurality of sections which can be assembled to form a body which includes a bore having a first bore end and a second bore end, wherein during installation of the fibre unit, the pressurised fluid is fed via the bore into the fibre tube connected to the first bore end, and a seam where the plurality of sections join through which the pressurised fluid can escape from the bore, and a shielding device comprising shielding means non-integral with the apparatus, to reduce fluid leakage from the bore through the seam.

According to a third aspect of the invention, there is provided apparatus to install a fibre unit into a fibre tube using pressurised fluid, comprising a plurality of sections which can be assembled to form a body which includes a bore having a first bore end and a second bore end, wherein during installation of the fibre unit, the pressurised fluid is fed via the bore into the fibre tube connected to the first bore end, and a seam where the plurality of sections join through which the pressurised fluid can escape from the bore, and shielding means to reduce the fluid leakage from the bore through the seam, the shielding means comprising a first tube being non-integral with the apparatus, a second tube being non-integral with the apparatus, and a deformable seal, wherein during installation of the fibre unit, the first tube occupies the first bore end, the second tube occupies the second bore end, and the deformable seal is located between a mouth of the first tube and a mouth of the second tube, so that a continuous shield is provided along the bore, to reduce fluid leakage from the bore through the seam.

According to a further aspect of the invention there is provided a method of installing a fibre unit into a first fibre tube and a second fibre tube using the shielding device of claim 1, or the apparatus of claim 6, or the apparatus of claim 11, wherein the fibre unit has a first fibre end and a second fibre end, and wherein a gap separates the first fibre tube from the second fibre tube, the method comprising the steps of assembling the apparatus including a first shielding device, feeding the first end of the fibre unit into the first fibre tube, and installing the fibre unit into the first fibre tube, un-assembling the apparatus and removing the first shielding device with the fibre unit threaded therethrough, re-assembling the apparatus including a second shielding device, feeding the second end of the fibre unit into the second fibre tube, and installing the fibre unit into the second fibre tube, and un-assembling the apparatus and removing the second shielding device with the fibre unit threaded therethrough.

According to a yet further aspect of the invention there is provided an optical fibre installation comprising a first fibre tube having a bore, a second fibre tube having a bore, the second fibre tube separated from the first fibre tube by a gap, a fibre unit extending through the bore of the first fibre tube to the bore of the second fibre tube via a gap, and at least one shielding device having a bore, through which the fibre unit extends.

Embodiments of the invention address and provide technical advantages in respect of the issues related to excessive air loss, bi-directional installation, inflexibility in use with different-sized fibre bundles and tubes, and cost.

The invention will now be described, by way of example only, with reference to the following drawings in which:
Figure 1 is a view of the air chamber section of a blowing head of the prior art,
Figure 2 is view of an assembled air chamber of the invention,
Figure 3 is a view of an unassembled view of the air chamber showing its components,
Figure 4 is a view of the air inlet section of the air chamber,
Figures 5A and 5B are embodiments of a shielding device of the invention,
Figures 6A to 6E depict the stages in a bi-directional installation,
Figure 7 is a view of a completed bi-directional installation showing the use of shielding devices of the invention.

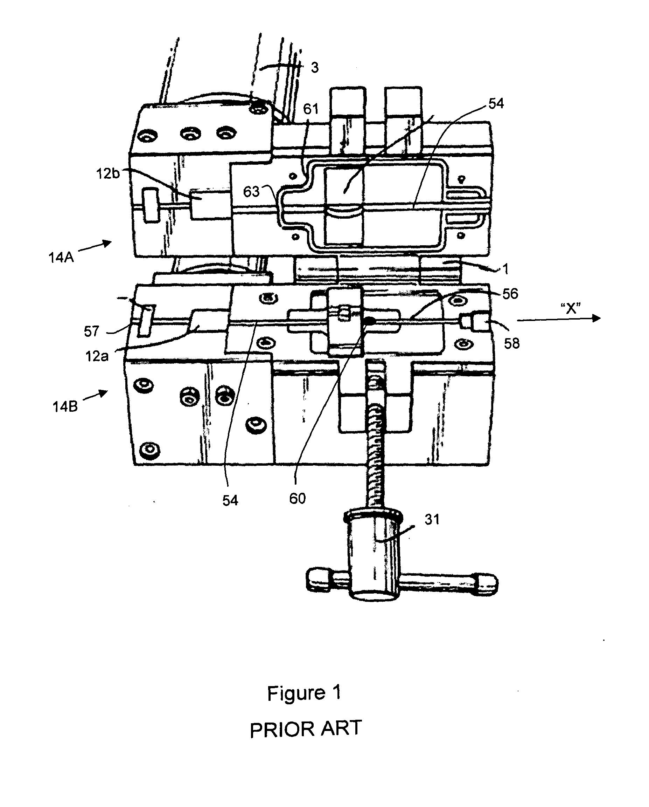

Figure 1 shows a prior art blowing head which was developed and used by the applicants for blown fibre installations. In this view, the operative part of the blowing head is open to view. The operative part of the blowing head consisting in the main of the bore through which the fibre unit passes, from the end into which the fibre enters the head (57), via a bore (54) to the end through which the fibre passes into the waiting fibre tube (58), and the components thereof, shall within this description be collectively referred to as the "air chamber". As noted earlier however, the concept of fibre blowing can include the use of any fluid, and not just air. A deformable seal (61) seeks to create an air-resistant seal in the relevant section air chamber from the atmosphere. In this blowing head, the air chamber is an integral part of the blowing head. The two sections of the blowing head (14a and 14b) including the air chamber are connected by a rotary hinge (1) and the sections in use are secured together with a clamp (31). This "split" design of this air chamber allows for bi-directional installation of blown fibre.

In a typical uni-directional installation session, a first end of the optical fibre is taken from a supply pan and a length laid along the bore path. The two sections of the air chamber are then clamped together. The end of the fibre points in the direction described by the arrow "X". The fibre tube (not shown) to be populated is connected to the blowing head at tube receiving portion (58), where the tube is held in place by friction when the blowing head is clamped together.

In a blowing session, drive wheels (12a and 12b) engage each other tightly. The fibre sits between the drive wheels. The motor (3) is turned on to cause the rotation of the drive wheels, propelling the fibre in the direction described by the arrow "X" into the mouth of the fibre tube.

Meanwhile, pressurised air is pumped into the air chamber via the air inlet (60); ideally, all or most of the air moves into the fibre tube according to the methods described in EP108590. However as discussed herein, a great deal of air is lost through inadequate sealing in the air chamber. The pressurised air, fed into the narrow air chamber bore, seeks to escape to the atmosphere particularly along the length of the bore (54) although some may also be lost at the fibre entry end (57) of the bore. The applicants find that the seal (61) is inadequate to prevent the air from escaping under pressure. Moreover, the bore (54) may be imperfectly created from inaccurate alignment of the co-operating grooves on each section (14a and 14b). With the use of the glass bead-coated EPFU, the section of the deformable seal contacting the fibre unit during use (63) is highly vulnerable to being worn by the cutting effects of the glass beads: this creates yet another point for the air to escape under pressure, which fissure enlarges with time and use of the head.

The applicants find that in a typical session where the air is pressurised to about 10 bar, about 80 litres of air could be lost from the air chamber per minute.

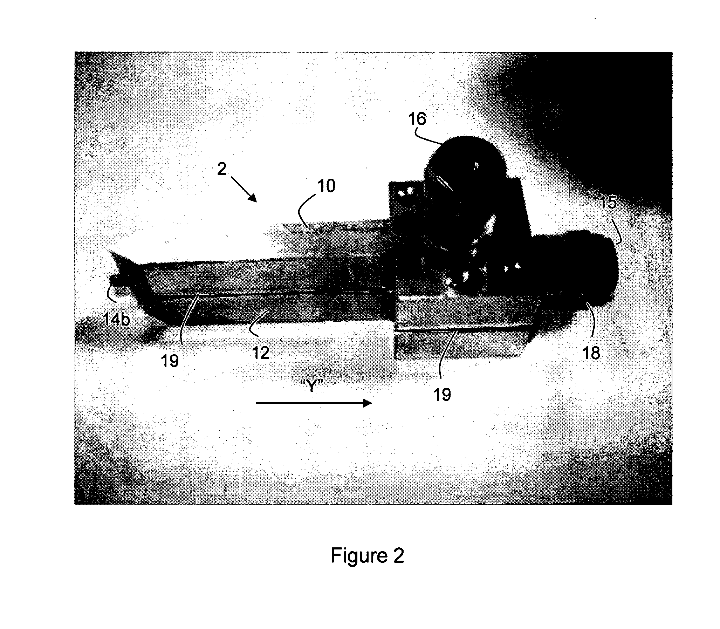

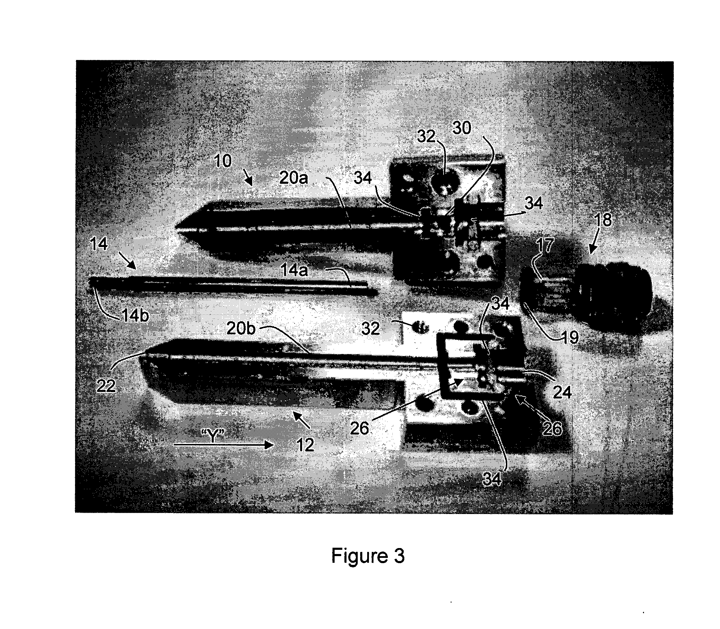

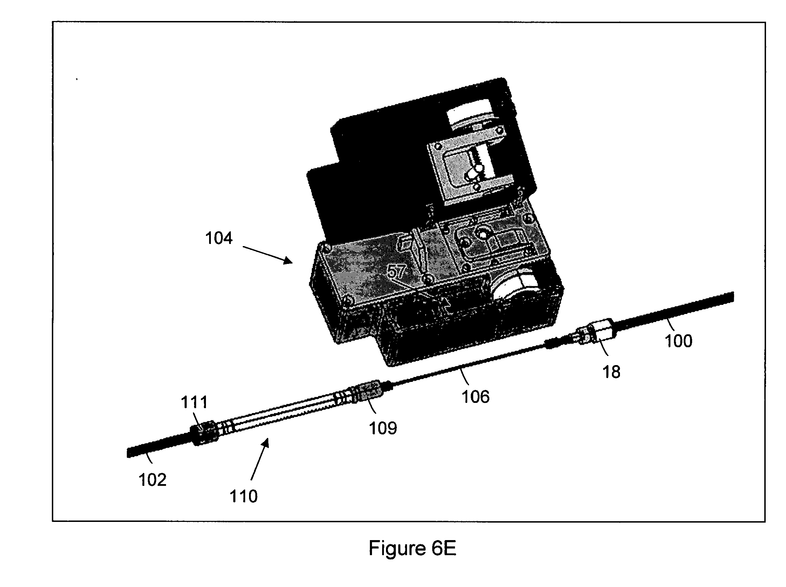

Figures 2 and 3 show views of an air chamber of the invention. Unlike the blowing head of the prior art where the air chamber was integral to the blowing head, this air chamber is designed as a modular unit (2), which fits into a space allocated to it within the blowing head (the blowing head is shown in Figure 6E below and the space is arrowed 200). The other parts of the blowing head remain substantially similar to that of the prior art blowing head, including drive wheels, a motor to power the drive wheels, and so on, and so shall not be discussed any further here.

There are significant advantages to designing the air chamber as a modular unit. In this invention, only the air chamber itself needs to be clamped together, unlike the blowing head of the prior art, where the whole head had to be clamped during installation. This does away with the need for strong and expensive clamps encircling the whole blowing head, such as that (31) in Figure 1. A second advantage of deploying a modular air chamber is its ability to work with a variety of sizes of fibre units and tubes. In particular, the same blowing head can be used with air chambers of various internal dimensions: for example, the same blowing head can be deployed for fibre units of various sizes by using air chamber having differently-sized bores. Further, as the glass bead-coated fibre units pass through the air chamber, this part of the blowing head is likely to suffer the greatest wear, and a modular unit allows for replacement of just this part.

Turning back to Figure 2, the air chamber (2) is shown in an assembled state, comprising, in this embodiment, two sections (10 and 12). The air chamber includes within it a bore (20) which is shown in the unassembled view of the blowing head in Figure 3 below. The bore extends the length of the air chamber. In use, a fibre unit travels as shown in the direction shown by arrow "Y" through the chamber from a "fibre-entry" end of the chamber (22 in Figure 3) to a "fibre-exit" end (24 in Figure 3). A tubular member (14) is sandwiched in place between the two sections (10 and 12) and dimensioned to be held in place within the bore when the chamber is assembled. In the embodiment shown in Figure 2, the end of the member (14b) is just visible.

This blowing head is fashioned to accommodate a tube connector (18). The fibre tube (not shown) can be friction-fitted connected to the tube connector fibre tube at its second end (15). The tube connector thus serves as a bridge between the air chamber and the fibre tube, unlike the blowing head of the prior art where the fibre tube was directly clamped in the air chamber at section (58 in Figure 1). The advantage of the present arrangement over the prior art head of Figure 1 is flexibility as the air chamber can be used with a variety of sizes of fibre tubes.

There are a variety of tube sizes in current use (certainly more than two) and more sizes may be in use in the future. Similarly, a variety of sizes of fibre unit bundles are in current deployment - this could range from a single fibre unit, to a larger bundle of 12 or more. Again, it is unknown what sizes such bundles could take in the future. A blowing head having a capability of accepting a variety of tube sizes and fibre unit bundles would go some way to future-proofing the device.

Should a larger or smaller tube be used in a particular installation session, another tube connector capable of receiving the larger or smaller tube can be used, as long as air chamber end of the connector is dimensioned to fit into the air chamber (17 in Figure 3)

Also shown in this Figure 2 is the air inlet connector (16), which connects the air chamber to the hose leading from an air compressor which supplies pressurised air into the air chamber.

Figure 3 is a view of an unassembled air chamber of the invention. The chamber here comprises three main parts: the two sections making up the air chamber (10 and 12), to be assembled together for use, and a tubular member (14).

As shown in Figure 3, the bore (20) runs the length of the air chamber, which in this embodiment is formed from co-operating grooves (20a and 20b) when the two sections (10 and 12) are assembled together. Upon assembly of the sections, a longitudinal section join or seam (19 in Figure 2) running the length of the air chamber is formed. This seam extends to and from the bore (20) to the exterior of the air chamber.

The bore extends between the fibre-entry end (22), to the fibre-exit end (24), wherein the fibre travels in the direction of arrow "Y" when the blowing head is in use. As shown in the previous figure, the fibre-exit end (24) can be occupied by a tube connector (18).

Pressurised air can be fed into the chamber bore via the air inlet (30), being an aperture through the section (10). In the prior art blowing head, the air escapes from the equivalent bore through the seam created when the sections of the head are assembled, in spite of the seals employed.

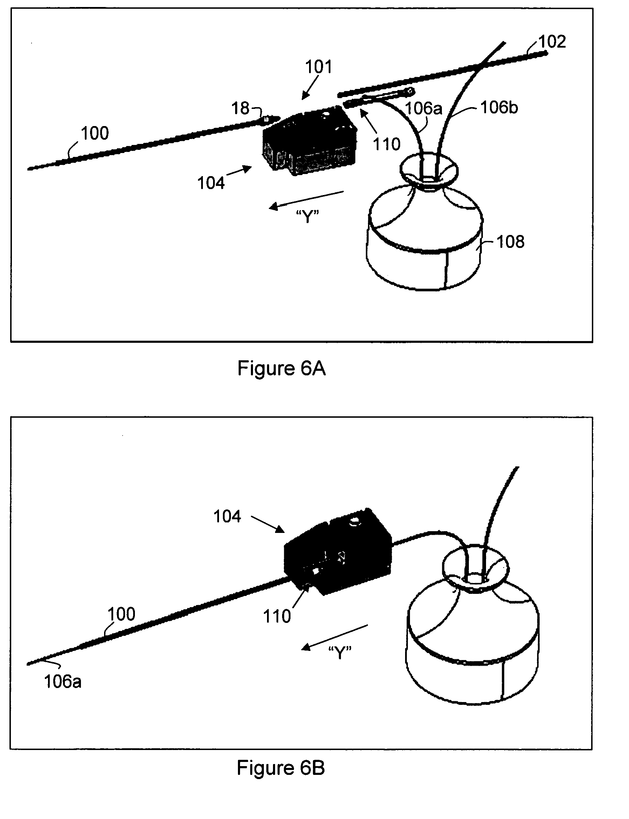

The tubular member (14) of the present invention is preferably completely closed along its length, having a bore terminating in a mouth at each end, and dimensioned to fit into and be secured within the bore (20). When the air chamber is assembled with the tubular member in place within the chamber, the pressurised air is forced substantially through the tubular member along one section of the bore. The tubular member serves to obviate the need for deformable seals along the length it occupies within the air chamber bore. Unlike the seals of the prior art air chambers, this sealing method is separate and non-integral with the rest of the air chamber, which is crucial for bi-directional installations, as will be explained below in connection with Figures 6A to 6E.

As discussed above, the sections of the prior art air chamber of Figure 1 are connected by a rotary hinge. In the present head, the two sections (10 and 12) are arranged to be assembled in a linear fashion - this allows for greater accuracy in alignment of the grooves (20a and 20b) than by the rotary hinge of the prior art head, especially over time. A rotary hinge could become loose with use, so that the grooves making up the bore define an increasingly unspecific path along which the pressurised air is to flow.

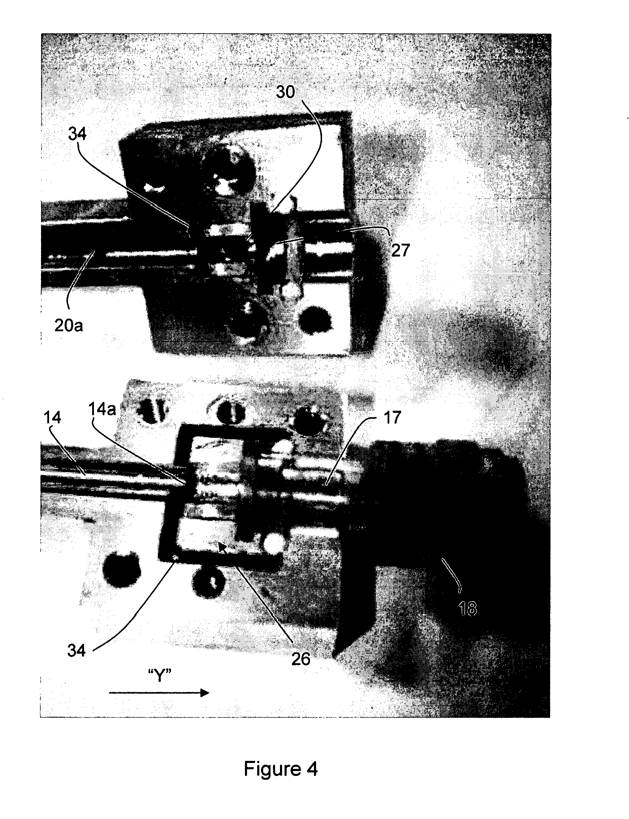

In this embodiment, deformable seals (34) are employed, but only for a relatively small section along the bore, specifically the area immediately around the air inlet (30). This area around the air inlet up to the boundary defined by the deformable seals, shall in this description be termed the "sealed area" (26). The seals (34) are provided on both sections (10 and 12) of the air chamber, and the necks of the tube connector (18) and the tubular member (14), when in position, compress the deformable seals (as shown in Figure 4).

This arrangement creates a substantially air-resistant channel along the length of the air chamber it is assembled, extending from the fibre-entry end (22) of the air chamber to the fibre-exit end (24). The air-resistant channel is created along the communicating internal bores of the tubular member (14), the sealed area (26) around the air inlet, and the tube connector (18).

In this embodiment, air loss from within the tubular member (14) and the tube connector (18) are drastically reduced as they are both substantially closed tubes, so that the only area of some vulnerability is the sealed area (26). It will be appreciated that the "vulnerable" area protected by deformable seals in this air chamber is considerably smaller than the equivalent area in the prior art air chamber (the area being that demarcated by the seals 61 in the prior art head shown in Figure 1). As a result, less clamping is required as the volume of air in this reduced space brings considerably less pressure to bear against the seals, compared to the equivalent space in the prior art blowing head. This means that only relatively small and inexpensive screws are required, which engage with the screw holes (32). This can be compared with large clamp (31) of the prior art blowing head.

Blowing heads including "unitary" air chambers are known in the prior art, which comprise a single chamber incapable of being opened, and thus incapable of bi-directional installation of blown fibre. In such chambers, air leakage is confined to the two ends where the optical fibre enters and exits (equivalent to 22 and 24 in the current invention). Thus air loss is significantly reduced compared to the prior art device capable of bi-directional installation shown in Figure 1. However the inability of a head with a unitary air chamber to bi-directionally install fibre means that a separate device will be required for longer-distance installations.

As noted earlier, a consequence of the levels of air loss suffered by the blowing head of the prior art is that an insufficient amount of air is fed into the fibre tube awaiting population by the optical fibre. With insufficient air in the tube, fibre units cannot be effectively "blown" along the fibre tube. To overcome this problem, very large, powerful and expensive air compressors have to be used, requiring a number of operatives to transport and deploy to make good the deficiency. With the drive for inexpensive, mass-deployment blown installations in the push to FTTH, such waste and the need to overcompensate is unacceptable. At the same time, the need for an adaptable piece of equipment adaptable for both bi- and uni-directional blowing remains pressing.

The air chamber of the current blowing head addresses the problem of excessive air leakage in a blowing head capable of bi-directional installation, by reducing air loss to levels close to those experienced in a "unitary" air chamber. As noted above, such air chambers lose air only at the fibre-entry and fibre-exit points, as seams in the air chamber are shielded from air loss right at the bore. This is contrasted with the blowing head of the prior art in Figure 1, where air escapes along the seams of the assembled air chamber during use.

Alternatives to the embodiment shown in Figures 2 and 3 based on the inventive concept may become apparent to the skilled person. For example, the tubular member extending the whole length of the air chamber bore, from the fibre-entry end to the tube connector, so that a continuous path extends from fibre-entry to the fibre-exit end, without the need for deformable seals around the sealed area (26). In such an embodiment, the tubular member could include an aperture to coincide with the air inlet to allow air to be fed into the chamber, and slot directly into the tube connector, or into the fibre tube.

Yet another variation to the tubular member is one which is not completely closed along its length, but which functions to shield the bore of the air chamber against the seams of the assembled air chamber.

Turning now to Figures 3 and 4, the fibre-exit end (24) of the air chamber receives and retains a tube connector (18). The neck (17) of the connector rests on the fibre-exit end (24) and a connector flange (19) is held within a co-operating slot (27) within the sealed area, as shown in greater detail in Figure 4. When the air chamber is assembled, the seals (34) compress around the neck (17) of the tube connector, to discourage air from escaping from the sealed area.

The tubular member (14) fits in the bore (20) in a manner so that the air inlet (30) is not blocked. Figure 4 shows how one end (14A) of the tubular member, when installed, sits shy of the air inlet within the sealed area (26). When the air chamber is assembled, this end (14a) of the tubular member is completely surrounded by compressed seals (34).

In the arrangement shown here, sections of the tube connector and the tubular members protect the deformable seals from direct contact with the cutting effects of the glass bead-coated fibre units.

It is envisaged by the applicants that the tubular member used in the present invention will be made from very inexpensive materials using a very simple and cheap process so as to be considered disposable. This permits a relatively non-durable material to be used even with EPFU, as the tubular member can be discarded once it degrades so that it is no longer fit for purpose. However to fulfil its function, the tubular member should be:
(i) sufficiently durable to withstand the effects of an EPFU running through it for the duration of at least one fibre installation session - for example, it could be made from a hard-wearing plastic manufactured by moulding or extrusion methods. Where it is envisaged that the tubular member may be used for a number of installations, it could be made from anodised aluminium or stainless steel;
(ii) is sufficiently lightweight to be supported by a length of optical fibre without further strengtheners or support (as it will be left in situ after a bi-directional installation, in particular, as discussed below in connection with Figures 6A to 6E); and/or
(iii) does not interfere with the performance of the optical fibre during its use, both for when the fibre unit is being installed, and when signals are transmitted along the fibres. For example, the tubular member should ideally have an internally smooth profile, be made of a material which does not interfere with the signal transmission.

In a preferred embodiment, the fibre-entry end (14b) of the tubular member is narrower than the fibre-exit end (14a). This has the effect of discouraging air from flowing against the direction of the fibre movement as indicated by arrow "Y", away from the tube connector. To enhance this, the tubular member (14) in the embodiment is dimensioned to be relatively long with a small internal diameter. With the air inlet positioned to be as near to the mouth of the tube connector as possible, so that the air preferentially flows into the connector (which has an internal bore larger than the tubular member) to maximise the volume of air travelling into the fibre tube.

The following is a table showing the levels of air loss for various combinations of dimensions for the internal bore of the tubular member, based on tests using a fibre of diameter 1 mm.

| **Pressure (bar)** | **1.08mm / 12. mm** | **1.08mm / 25mm** | **1.08mm / 50mm** | **1.08mm / 75mm** | **1.18mm / 12.5mm** | **1.18mm/ 25mm** | **1.18mm / 50mm** | **1.18mm / 75mm** |
|---|---|---|---|---|---|---|---|---|
| 7 | 7.5 | - | 4.3 | 2.9 | 22.5 | 16.7 | 13 | 8.2 |
| 7.5 | 8 | - | 4.7 | 3 | 25.6 | 17.7 | 14 | 8.9 |
| 8 | 8.5 | - | 4.95 | 3.3 | 27 | 18.7 | 14.9 | 9.3 |
| 8.5 | 9 | 7 | 5.2 | 3.5 | 28.4 | 19.7 | 15.8 | 9.9 |
| 9 | 9.6 | 7.5 | 5.5 | 3.8 | 30.2 | 20.9 | 16.7 | 10.5 |
| 9.5 | 10.05 | 7.9 | 5.9 | 4 | 32 | 22 | 17.5 | 11 |
| 10 | 10.7 | 8.25 | 6.1 | 4.2 | 33.9 | 24 | 18.1 | 11.5 |

As can be seen in the test results above, the greatest air loss is experienced in a relatively short, wide bore (the 1.18mm / 12.5mm combination above), as compared to a longer, reduced bore (1.08mm / 75mm). Subject to the constraints of physically tooling the channels and allowing sufficient leeway for the fibre to move through the bore, a narrower bore provides less room for air to escape. This effect is augmented by increasing the length of the bore.

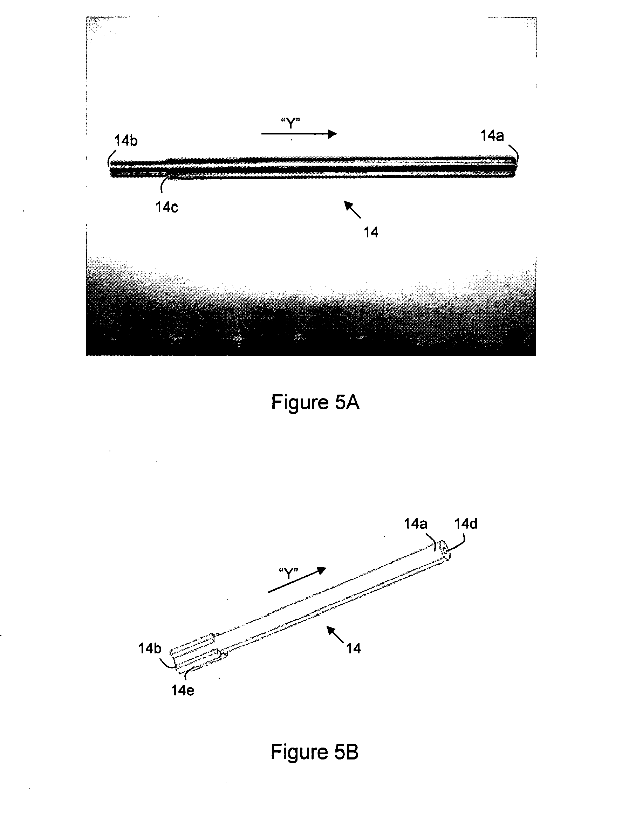

Figure 5A and 5B show two embodiments of the tubular member. Figure 5A shows the tubular member already discussed in Figures 2, 3 and 4. It comprises a tube which is closed along its length, so that it is open only at the two ends of its bore at fibre-entry end (14a) and fibre-exit end (14b). A shoulder (14c) serves the dual function of anchoring the tube in the bore when installed in the air chamber, and reducing the internal diameter of the bore - and thus discouraging air flow - against the direction of arrow "Y".

Figure 5B is an alternative embodiment of the tubular member, which includes projections (14c), which help to centre the tubular member within a closedown assembly unit (110 in Figures 6A to 6E) after an bi-directional installation session which will be described in full below in connection with Figure 6A to 6E. The bore of the tubular member (14d) is visible in this view. The dimensions of the internal bore (not visible) of the tube can reduce against the direction of arrow "Y" to achieve the effect of discouraging air flow in that direction.

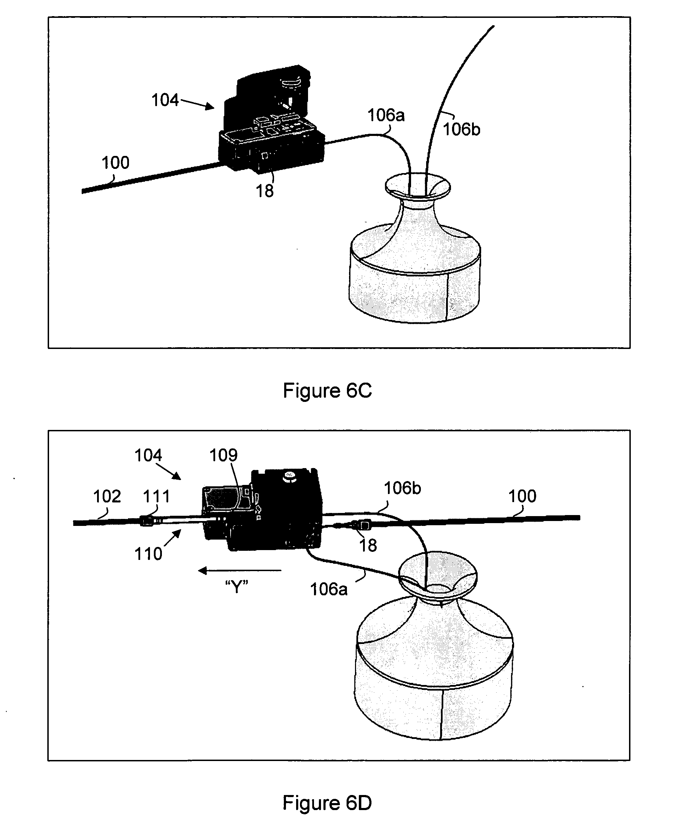

Figures 6A to 6E depict the stages involved in a typical bi-directional installation using a blowing head including the air chamber of the invention. As explained above, this installation method is used when the total length of fibre tube to be populated is too long for a fibre unit to be easily blown using a uni-directional installation. This method may also be employed when the bores of the two tubes are of different internal sizes, or wherever uni-directional installation is not possible or feasible, e.g. where there is an obstacle in the junction of the two tubes.
(i) In the initial set up stage of the bi-directional installation shown in Figure 6A, a gap (101) is provided at an intermediate point along the length of the fibre tube. The gap separating the two resulting tube lengths (100 and 102) has to be large enough to accommodate a blowing head (104). The air chamber of the invention is already assembled and located in its position within the blowing head, (not shown). Fibre unit (a single length 106, comprising 106a and 106b) to populate the fibre tubes is taken from a supply pan (108). A tube connector (18) is fitted on the end of fibre tube (100). Also shown in this figure is a closedown assembly unit (110). This closes up the gap (101) after installation is complete and the head removed, to protect the fibre. The ends of the closedown assembly comprises essentially a tube usually of the same material as the fibre tube, and usually includes seals at each end to prevent ingress of e.g. water into the assembly unit. In a preferred embodiment, the tube connector (18) include s screw threads which allow it to co-operate with the closedown assembly to perform the sealing function. One or both ends of the closedown assembly could also serve as tube connectors (e.g. 109 in Figure 6D or 6E).
(ii) To populate the first fibre tube (100), an operative takes the end of the first length of fibre unit (106a) and installs it into the fibre tube using the blowing head. Figure 6B shows the completion of this stage of the process, where the fibre unit has been blown through the full length of the first tube (100) so that the end of the fibre unit reaches the far end of the tube (106a).
(iii) In the next stage, the operative opens the blowing head, then the air chamber. At this point, the fibre unit within the air chamber is threaded through the tubular member and the tube connector (18) into the fibre tube (100). It is not possible to remove the tubular unit nor the tube connector. The operative lifts the fibre unit, tubular member and the tube connector away from the air chamber, as shown in Figure 6C.
(iv) The blowing head is then turned around so that the fibre-exit end of the air chamber is facing the mouth of the second tube (102). (In Figure 6D, the blowing head is shown from the opposite side so that populated tube (100) is now facing in the opposite direction to that depicted in Figure 6C.)
   Another tubular member (14) is fitted to the air chamber, the air chamber and the blowing head are then assembled and sealed shut. In Figure 6D, a cutaway view of the blowing head shows that one end (109) of the closedown assembly (110) functions as the tube connector for this stage of the installation. The closedown assembly unit is pushed back over fibre tube (102) in a manner which leaves the gap clear to accommodate the blowing head. The end (109) is clamped into the air chamber. The operative takes the end of the second length of fibre unit (106b) from the supply pan, loads and installs the fibre into the second tube in the same way as was for the first tube.
(v) Typically, the installation of the fibre unit into the second fibre tube continues until the supply pan is empty. At that stage, shown in Figure 6E, a single length of fibre unit (106) extends the full length of both fibre tubes (100 and 102), bridging the gap (101) therebetween. To complete the installation, the closedown assembly is slid along fibre tube (102) until it bridges the gap (101). The connector (18) and end (109) are then screwed together to seal the unit to protect the fibre. The other end of the closedown assembly (111) is similarly sealed close.

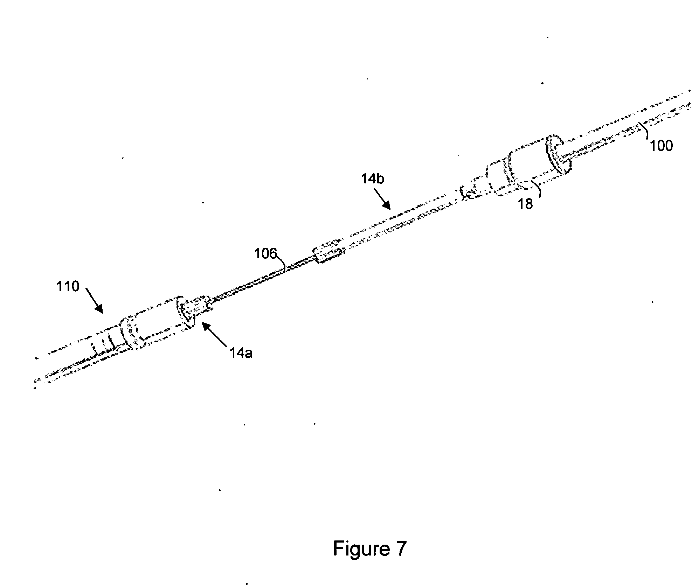

A particular aspect of this bi-directional installation method is that the tubular members are left in situ with the fibre units threaded through them, and hidden under the closedown assembly (110) and the fibre tubes (100 and 102) at the end of the installation. Figure 7 shows a completed installation with two tubular members (14a and 14b), where the closedown assembly is part-way slid into the final position to completely cover the fibre unit (106) and the tubular members.

A blowing head with an air chamber of the invention can of course also be used for uni-directional installations, which would typically include steps (i) and (ii) described above against Figure 6A and 6B. After the (first) fibre tube (100) has been populated by the fibre unit (106a) however, the operative cuts the fibre unit as there is no second tube. In such a case, the air chamber need not be opened up nor the tubular unit sitting therein disturbed from its position, as the fibre unit can run right through the blowing head. This means that the tubular unit can be used a number of times, as opposed to a single use in the case of a tube used for bi-directional installation. The tubular member could be made from materials of differing durability, depending on the expected number of uses.

The skilled person would recognise that a number of variations and alternatives based on the invention are possible to the devices, apparatus, methods, manufacturing methods and materials used. It is possible also to envisage other purposes, aims and environments to which these devices, methods and the like, may be applied. Accordingly, this invention is not limited to the particular set up and applications described herein.

## Claims

1. A shielding device to reduce fluid leakage, suitable for use with apparatus to install a fibre unit into a fibre tube using pressurised fluid,
the apparatus comprising a plurality of sections which can be configured to form a bore, the bore having a first bore end and a second bore end, wherein during installation of the fibre unit, the pressurised fluid is fed via the bore into the fibre tube connected to the first bore end, and wherein the apparatus, when assembled, includes a seam where the plurality of sections join through which the pressurised fluid can escape from the bore,
the shielding device comprising shielding means non-integral with the apparatus, for reducing the fluid leakage from the bore through the seam when in use.

2. A shielding device according to claim 1, wherein the shielding means extends parallel to the axis of the shielding device.

3. A shielding device according to any preceding claim, wherein the shielding means is a hollow tube suitable for occupying the bore.

4. A shielding device according to claim 2, wherein the shielding means is a hollow tube suitable for occupying the bore, the tube having a first tube end and a second tube end, and wherein during installation, the first tube end occupies the first bore end, and the second tube end occupies the second bore end.

5. A shielding device according to claim 4 wherein the internal diameter of the first tube end is greater than the internal diameter of the second tube end.

6. Apparatus to install a fibre unit into a fibre tube using pressurised fluid, comprising:
a plurality of sections which can be assembled to form a body which includes
- a bore having a first bore end and a second bore end, wherein during installation of the fibre unit, the pressurised fluid is fed via the bore into the fibre tube connected to the first bore end, and
- a seam where the plurality of sections join through which the pressurised fluid can escape from the bore, and
(ii) a shielding device comprising shielding means non-integral with the apparatus, to reduce fluid leakage from the bore through the seam.

7. Apparatus according to claim 6, wherein the seam extends along the axis of the bore.

8. Apparatus according to claim 7, wherein the shielding means extends along the axis of the bore.

9. Apparatus according to claim 6, wherein the shielding means is a tube suitable for occupying the bore.

10. Apparatus according to claim 9, wherein the tube occupies the bore from the first bore end to the second bore end, and wherein the internal diameter of the tube occupying the first bore end is greater than the internal diameter of the tube occupying the second bore end.

11. Apparatus to install a fibre unit into a fibre tube using pressurised fluid, comprising:
(i) a plurality of sections which can be assembled to form a body which includes
(a) a bore having a first bore end and a second bore end, wherein during installation of the fibre unit, the pressurised fluid is fed via the bore into the fibre tube connected to the first bore end, and
(b) a seam where the plurality of sections join through which the pressurised fluid can escape from the bore, and
(ii) shielding means to reduce the fluid leakage from the bore through the seam, the shielding means comprising
(a) a first tube being non-integral with the apparatus,
(b) a second tube being non-integral with the apparatus, and
(c) a deformable seal
wherein during installation of the fibre unit, the first tube occupies the first bore end, the second tube occupies the second bore end, and
the deformable seal is located between a mouth of the first tube and a mouth of the second tube,
so that a continuous shield is provided along the bore, to reduce fluid leakage from the bore through the seam.

12. Apparatus according to claim 11, wherein the internal diameter of the first tube is greater than the internal diameter of the second tube.

13. Apparatus according to claim 11, further including an inlet through which the pressurised air is fed into fibre tube via the bore, wherein the deformable seal is located proximate to the air inlet.

14. A method of installing a fibre unit into a first fibre tube and a second fibre tube using the shielding device of claim 1, or the apparatus of claim 6, or the apparatus of claim 11,
wherein the fibre unit has a first fibre end and a second fibre end,
and wherein a gap separates the first fibre tube from the second fibre tube,
the method comprising the steps of:
- assembling the apparatus including a first shielding device,
- feeding the first end of the fibre unit into the first fibre tube, and installing the fibre unit into the first fibre tube,
- un-assembling the apparatus and removing the first shielding device with the fibre unit threaded therethrough,
- re-assembling the apparatus including a second shielding device,
- feeding the second end of the fibre unit into the second fibre tube, and installing the fibre unit into the second fibre tube, and
- un-assembling the apparatus and removing the second shielding device with the fibre unit threaded therethrough.

15. A method according to claim 14 further including the step of bridging the gap between the first fibre tube and the second fibre tube.

16. An optical fibre installation comprising
a first fibre tube having a bore,
a second fibre tube having a bore, the second fibre tube separated from the first fibre tube by a gap,
a fibre unit extending through the bore of the first fibre tube to the bore of the second fibre tube via a gap, and
at least one shielding device having a bore, through which the fibre unit extends.

17. An optical installation according to claim 16, further including bridging means to bridge the gap between the first fibre tube and the second fibre tube, wherein the shielding device is substantially concealed by the bridging means.
